# EUROPEAN PATENT SPECIFICATION

(11) **EP 4 194 223 B1**
(45) Date of publication and mention of the grant of the patent: **27.05.2026**
(21) Application number: 21853636.5
(22) Date of filing: 04.08.2021
(51) Int. Cl.: B05D 5/02, B05D 3/02, B05D 3/06, B05D 3/04, B44F 1/02, C08J 3/28, C08J 7/04, C08J 7/046, C08J 7/12, C09D 5/16, B05D 7/04, B05D 1/26, B44C 5/04

(54) **ULTRA-MATTE DECORATIVE FILM**
ULTRAMATTENDEKORFOLIE
FILM DÉCORATIF ULTRAMAT

(30) Priority: 05.08.2020 KR 20200097987
(43) Date of publication of application: 14.06.2023
(73) Proprietor: LX Hausys, Ltd., Seoul 04637 (KR)
(72) Inventor: LEE, Bo Bin, Seoul 07796 (KR); KIM, Da Sol, Seoul 07796 (KR); CHOI, Tae Yi, Seoul 07796 (KR); NAM, Jae Gwang, Seoul 07796 (KR); KIM, Yong Jun, Seoul 07796 (KR)
(74) Representative: Eisenführ Speiser
(86) International application number: PCT/KR2021/010270
(87) International publication number: WO 2022/031035

(56) References cited:
- EP-A1- 4 043 528
- EP-A1- 4 316 818
- WO-A1-2012/013364
- WO-A1-2020/190751
- WO-A1-2022/210494
- KR-A- 20110 058 175
- KR-A- 20130 028 342
- KR-A- 20200 032 878
- KR-B1- 101 225 512
- KR-B1- 102 016 954
- US-A1- 2020 024 439
- US-A1- 2020 030 845

## Description

### Technical Field

The present application relates to an ultra-matte ornamental or decorative film, which relates, more specifically, to an ornamental or decorative film with improved contamination resistance, and the like, while maintaining ultra-matte characteristics.

### Background Art

When manufacturing interior materials for buildings or films for furniture, decorative sheets having matte characteristics (or low light characteristics) are widely used. Specifically, the matte characteristics of the decorative sheet may be achieved in a manner of forming irregularities on the surface to induce diffuse reflection, but in the conventional technology, it was common to use, for example, a technique of manufacturing a decorative sheet with matte characteristics through a treatment by a method of applying a coating treatment agent containing a quencher (e.g., silica, etc.) on a base material, and then curing it.

However, when surface irregularities are formed to implement matte characteristics, there is a problem that contamination resistance of the sheet is deteriorated because contaminants penetrating between peaks and valleys of the irregularities are not easily removed. Moreover, the general quencher is porous and has a low apparent specific gravity, so that while it is located on the surface layer of the coating, it also causes deterioration of contamination resistance, such as surface adsorption increase of foreign substances (e.g., fine dust, moisture, oil stains, etc.).

Since matte characteristics and contamination resistance are trade-off properties from each other, it is not easy to provide a decorative sheet that simultaneously satisfies both.

Document WO 2012/013364 A1 deals with a process for scratch- and abrasionresistant coating and physical matting of plastics substrates with nanocomposite coating material.

Documents US 2020/0024439 A1 and US 2020/030845 A1 both suggest a low-gloss cured product having excellent stain resistance and a manufacturing method therefor.

### Disclosure

### Technical Problem

It is one object of the present application to resolve the problem of the conventional technology as described above.

It is one object of the present application to provide a decorative film simultaneously with excellent ultra-matte characteristics and contamination resistance, which have a trade-off relationship according to the conventional technology.

The above objects of the present application, and other objects can all be solved by the present application to be described in detail below.

### Technical Solution

In one aspect of the present application, a decorative film is provided, which is obtainable or obtained by a method according to the present invention as defined in the appended claims.

The decorative film may comprise a base material layer; and a coating layer located on at least one side of the base material layer and having a surface on which fine wrinkles are formed. In one example, the coating layer surface may have 60° glossiness (G) of 1.5 to 6.5.

The coating layer may be a silicone component-containing coating layer.

The coating layer is a cured product of a resin composition, wherein the resin composition may comprise a monomer component and an oligomer component.

The monomer component may comprise 10 to 30 parts by weight of a monofunctional monomer and 15 to 35 parts by weight of a multifunctional monomer.

The oligomer component may comprise 1 to 10 parts by weight of a bifunctional oligomer and 35 to 65 parts by weight of an oligomer with 3 or more functionalities.

A contamination resistance rating for the coating layer surface, wherein a curry is applied to the surface, and it is left for 1 hour while covered with a petri dish, and then wiped with a neutral detergent, may be grade 4 or 5.

In one example, in a contamination resistance test according to DIN 68861:2011, part 1 of EN 12720 for the coating layer surface, the contamination resistance of the coating layer surface to mustard, wine, coffee, tea, water, and ethanol may be grade 4 or 5, respectively.

The coating layer surface may have roughness (Rz) in a range of 3 to 12 µm.

In one example, the coating layer surface may have a remaining trace level rating of grade 3 or more as measured 1 minute after the artificial eccrine perspiration/sebum emulsion used in ASTM D4265-98 is applied to the coating layer surface using a stamp.

In one example, as a surface hardness test for the coating layer surface, the surface hardness measured by Erichsen Universal Scratch Tester 413 using a diamond tip on the coating layer surface may be 0.4 N or more.

In one example, as an abrasion resistance test for the coating layer surface, the difference in gloss before and after abrasion measured by a taber abrasion tester performed for 1000 cycles with a load of 1 kg using a CS-10 abrasive wheel on the coating layer surface may be 0.9 or less.

In one example, as an abrasion resistance test for the coating layer surface, the weight difference before and after abrasion measured by a taber abrasion tester performed for 1000 cycles with a load of 1 kg using a CS-10 abrasive wheel on the coating layer surface may be 1.1 mg or less.

In one example, as a chemical resistance test according to ASTM D5402 for the coating layer surface, in the MEK rub test performed after rubbing the coating layer surface with a load of 3 kg for 1000 cycles, there may be no change in appearance.

In another aspect of the present application, a method for manufacturing a decorative film is provided.

The manufacturing method relates to a method for manufacturing the above-described decorative film including a base material layer and a coating layer comprising: a first light irradiation step of irradiating a composition applied on the base material layer with light (L1) having a predetermined wavelength under an inert gas condition to form wrinkles on the surface of the applied composition; and a second light irradiation step of irradiating the composition with light (L2) having a longer wavelength than that of the light (L1) under an air condition to form the coating layer, which is a cured product of the composition, wherein the light (L2) has a wavelength in a range of 200 to 400 nm.

### Advantageous Effects

According to one example of the present application, it is possible to provide an ultra-matte decorative film.

According to one example of the present application, it is possible to provide a decorative film with improved contamination resistance.

According to one example of the present application, it is possible to provide a decorative film simultaneously with excellent matt characteristics and contamination resistance, which are known to have a trade-off relationship with each other in the conventional technology.

### Description of Drawings

Figure 1 is an image photographing a surface of a matte film manufactured according to one example of the present application.
Figure 2 is an image photographing a surface of a matte film manufactured according to the conventional technology.

### Best Mode

The terms used in the present application are only used to describe specific examples, and are not intended to limit the present invention. Singular expressions include plural expressions unless the context clearly dictates otherwise. In the present application, terms such as "comprise" or "have" are intended to designate that the features, components, and the like described in the specification exist, but it does not mean that one or more other features or components, and the like cannot be present or added.

Unless defined otherwise, all terms used herein, including technical or scientific terms, have the same meanings as those commonly understood by those having ordinary knowledge in the technical field to which the present invention belongs. The terms such as those defined in commonly used dictionaries should be interpreted as having meanings consistent with the meanings in the context of the related art, and unless explicitly defined in the present application, they should not be interpreted in ideal or excessively formal meanings.

In the case of controlling the total content of monomers to 30 to 80% as one of the conventional decorative films, compared to the technology to disclose a formulation using monofunctional monomers in an amount of around 50% for forming wrinkles densely, maximizing softness, and adjusting viscosity of the solventless type, the present application may improve gloss reduction and softness by having used the monofunctional monomers only in an amount of 10 to 30% or so, and adding silicone oligomers. In addition, through addition of a multifunctional oligomer, it is possible to improve surface hardness/contamination resistance.

Hereinafter, a decorative film of the present application will be described in detail with reference to the accompanying drawings. However, the accompanying drawings are exemplary, and the scope of the decorative film of the present application is not limited by the accompanying drawings.

### Decorative film

In one aspect of the present application, a decorative film is provided.

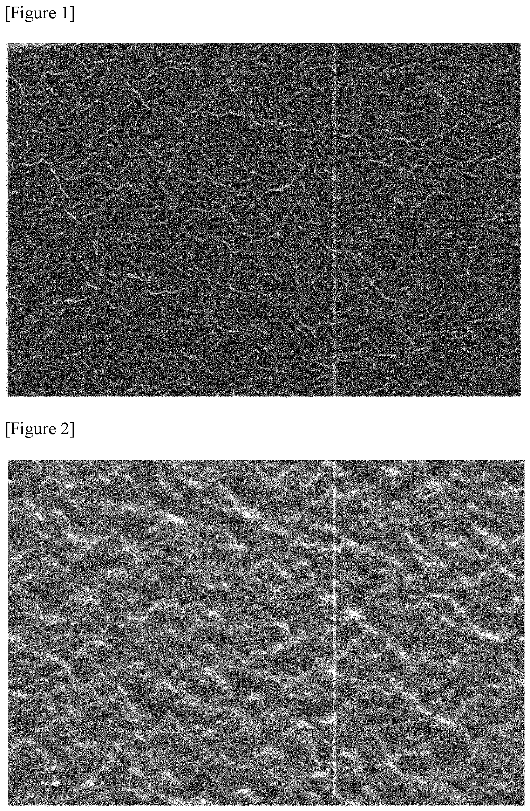

Figure 1 is an image photographing a surface of a matte film manufactured according to one example of the present application. In addition, Figure 2 is an image photographing a surface of a matte film manufactured according to the conventional technology.

Referring to Figures 1 and 2, it can be confirmed that the surface of the decorative film according to the present application has fine wrinkles formed thereon and exhibits ultra-matte characteristics.

The decorative film comprises a base material layer; and a coating layer located on at least one side of the base material layer and having a surface on which fine wrinkles are formed.

The coating layer may be a silicone component-containing coating layer.

The silicone component is a component derived from a silicone oligomer, and as the silicone oligomer is added, gloss can be lowered, softness can be improved, and the effect of anti-fingerprint properties can be provided. In addition, as the silicone is added, a de-wetting phenomenon is observed when writing with a name pen, whereby the contamination resistance is relatively excellent in ballpoint pens, name pens, and the like.

The type of the base material layer is not particularly limited. For example, the base material layer may comprise glycol-modified polyethylene terephthalate (PETG), polyvinyl chloride (PVC), or polyethylene terephthalate (PET).

The thickness of the base material layer is also not particularly limited. For example, the thickness of the base material layer may be 30 µm or more, 50 µm or more, 100 µm or more, 150 µm or more, 200 µm or more, 250 µm or more, 300 µm or more, 350 µm or more, 400 µm or more, 450 µm or more, or 500 µm or more. Then, for example, the thickness of the base material layer may be 3,000 µm or less, 2,000 µm or less, or 1,000 µm or less, specifically, 900 µm or less, 800 µm or less, 700 µm or less, 600 µm or less, 500 µm or less, 400 µm or less, or 300 µm or less.

A coating layer is attached on one side of the base material layer, where the coating layer has a micro folding structure.

The surface on which the micro folding structure is formed is one side opposite to one side of the coating layer facing the base material layer. The surface on which the wrinkles are formed may impart to the laminated film predetermined surface properties (e.g., surface hardness, glossiness, elongation, etc.) to be described below.

In the present application, the "micro folding structure" means that the coating layer includes wrinkles on at least one side thereof, and the coating layer has three-dimensional surface irregularities by the wrinkles. For example, the surface has irregularities including relatively large peak portions (ridges), valley portions, and wrinkles formed therefrom and visible in a predetermined shape. The peak portions, valley portions, and wrinkles may each have a regular or irregular shape. The surface on which such wrinkles are formed is also referred to as a surface having a micro folding structure. On the contrary, the "micro-wrinkle portions" are also called micro fine wrinkle portions, which mean fine wrinkles with a relatively low height formed on the inside of the valley portions.

When observing the coating layer surface (S_{wrinkle}) on which wrinkles are formed in the normal direction of the coating layer, for example, peak portions, valley portions, wrinkles, and irregularities formed therefrom are observed over the entire region of the surface (S_{wrinkle}) through a curing process to be described below. The fact that the wrinkles or surface irregularities described in the present application are observed in the entire region of the coating layer surface can be expressed as the fact that it satisfies surface properties (e.g., matte characteristics, surface roughness, anti-fingerprint properties, etc.) to be described below.

The wrinkles may be observed in a form including a line shape (e.g., a straight line or a curve) having directionality. In one example, the surface wrinkles formed by repeating straight and curved shapes may impart bends such as mountain range shapes to the coating layer surface.

The surface irregularity structure formed by wrinkles having a line shape as above is clearly distinguished from a so-called point-wise irregularity shape formed according to a method of using particles in a composition for forming the coating layer or a method of using emulsion dispersion.

In one example, the surface may comprise wrinkles which may be visible in predetermined size and shape. Specifically, the wrinkles may have a line (straight line or curve) shape having a width ranging from several to several tens µm and extending a length ranging from several to hundreds µm.

The widths of the wrinkles and the lengths that the wrinkles are extended can be confirmed from an image (e.g., SEM) photographing a surface, on which wrinkles are formed, as in the accompanying drawings. Figure 2 is an image photographing a surface of a matte film manufactured according to the conventional technology.

Specifically, the ends of the wrinkles extended in a straight line or curved shape may form a slope, the height of which is gradually lowered, and be incorporated into the coating layer. In some cases, an end of any one wrinkle having the size and shape may be a starting point of another wrinkle or a connection portion with another wrinkle. In addition, when observing the cross-sectional curve near the wrinkle in a direction perpendicular to the extension direction of the wrinkle, the width of the wrinkle may form a slope that the height is gradually lowered in both directions originating the point or portion (e.g., peak portion) forming the height of the wrinkle, and be incorporated into the coating layer. Meanwhile, when a peak portion and a valley adjacent thereto form a wrinkle or a part thereof, a region of a visible shape including the valley may be regarded as the width of the wrinkle.

In one example, the width of the wrinkle may be, for example, 1 µm or more, 2 µm or more, or 3 µm or more. Then, the upper limit of the width of the wrinkle may be, for example, 20 µm or less, 15 µm or less, 10 µm or less, or 5 µm or less. When the above range is satisfied, it may be advantageous for the surface formed by wrinkles to have predetermined characteristics desired in the present application.

In one example, the length extended by the wrinkle may be 5 µm or more, or 10 µm or more, and specifically, it may be, for example, 20 µm or more, 30 µm or more, 40 µm or more, 50 µm or more, 60 µm or more, 70 µm or more, 80 µm or more, or 90 µm or more, or 100 µm or more. Then, the upper limit may be, for example, 500 µm or less, 450 µm or less, 400 µm or less, 350 µm or less, 300 µm or less, 250 µm or less, 200 µm or less, or 100 µm or less, and more specifically, it may be 90 µm or less, 80 µm or less, 70 µm or less, 60 µm or less, or 50 µm or less. When the above range is satisfied, it may be advantageous for the surface formed by wrinkles to have predetermined characteristics desired in the present application.

The wrinkle may have a predetermined height at most of its extending length. For example, the wrinkle may have a height of 1 µm or more. Specifically, when observing the cross-sectional curve of the wrinkle in a direction perpendicular to the extension direction of the wrinkle, the point or portion (e.g., peak portion) forming the height of the wrinkle and the point or portion (e.g., valley portion) of the coating layer where the width of the wrinkle is incorporated may have at least a height difference of 1 µm or more. At this time, the most of the length at which the height is observed means a length that is 70% or more, 75% or more, 80% or more, 85% or more, 90% or more, or 95% or more of the length that the wrinkle continuously extends along the shape. When the height difference in the extension direction of the wrinkle gradually decreases, so that the height becomes below or less than 1 µm, a shape in which the ends of the wrinkle are incorporated into the coating layer may be observed, or a shape in which the contact point with another wrinkle having a different size or shape from the wrinkle is started may also be observed. In the case of the latter, a more complex wrinkle structure may form irregularities on the surface.

The wrinkles may be observed over the entire region of the surface, and form surface wrinkles or irregularities while showing a regular or irregular distribution. The fact that the wrinkles or surface irregularities described in the present application are observed in the entire region of the coating layer surface may be expressed as the fact that the surface properties (e.g., matte characteristics, surface roughness, anti-fingerprint properties, etc.) to be described below are satisfied.

For example, the wrinkles on the surface may form surface irregularities while having a shape in which a plurality of wrinkles are separated in different directions from one identifiable point.

### Contamination resistance evaluation

The contamination resistance is basically a physical property to improve as a surface hardening density increases. As described above, such improvement in contamination resistance can be achieved by using a multifunctional oligomer and increasing the surface hardening density through two-step hardening to be described below. There are various substances capable of contaminating decorative sheets. For example, there are curry, mustard, wine, coffee, tea, and ethanol, and the like. After exposing the decorative film according to the present application as a target to a contaminant optionally selected from curry, mustard, wine, coffee, tea, ethanol, and the like, the degree of damage to the surface has been visually confirmed to be graded into grade 1 (severe damage) to grade 5 (no change). As a result, it has been confirmed that the cured product had a degree of contamination ranging from grade 4 (minimal change in gloss or color) to grade 5, specifically grade 5. From this, it can be known that the coating layer according to the present application has excellent contamination resistance.

The contamination resistance test for curry has the most severe conditions among the tests for the above-mentioned contaminants.

Specifically, a manufacturing method of a curry solution used for the contamination resistance evaluation is as follows. A curry solution is prepared by mixing curry powder (Ottogi (Korea)'s mild curry) and water in a weight ratio of 1:2. Here, the water at room temperature is used. In the contamination resistance evaluation method for curry, the above-prepared curry solution was applied to the coating layer surface, and then covered with a glass petri dish (40 mm in diameter, 25 mm in height), left for 1 hour, and then wiped with a neutral detergent, and after 30 minutes, the degree of damage to the surface was visually confirmed to be graded from grade 1 (severe damage) to grade 5 (no change). In the case of the decorative film of the present application, the contamination resistance grade may be grade 4 or 5.

Improvement of contamination resistance to curry can be achieved by using a multifunctional oligomer and increasing the surface hardening density through two-step hardening to be described below.

In one example, as a contamination resistance test according to DIN 68861:2011, part 1 for the coating layer surface, the contamination resistance to mustard, wine, coffee, tea, water, and ethanol on the coating layer surface may be grade 4 or 5, respectively.

### Glossiness evaluation

In one example, the 60° glossiness (G) of the coating layer surface may be 1.5 to 6.5.

In the present application, the "60° glossiness (G)" can be measured using a gloss meter according to ASTM D2457, which is a numerical value (GU: gloss unit) expressing a gloss degree of a surface. As the glossiness has a lower value, it can be regarded to be closer to the matte.

Specifically, the upper limit of the 60° glossiness (G) of the surface where the wrinkles are formed in the coating layer may be, for example, 6.5 or less, 6.4 or less, 6.3 or less, 5.9 or less, 5.8 or less, 5.7 or less, 5.6 or less, 5.5 or less, 5.4 or less, 5.3 or less, 5.2 or less, 5.1 or less, or 5.0 or less. The lower limit of the 60° glossiness (G) is not particularly limited, but it may be, for example, 1.5 or more, 1.6 or more, 1.7 or more, 1.8 or more, 1.9 or more, 2.0 or more, 2.1 or more, 2.2 or more, 2.3 or more, 2.4 or more, 2.5 or more, 3.0 or more, 3.5 or more, or 4.0 or more. When the coating layer surface of the film has 60° glossiness (G) in the above range, it is possible to provide matte characteristics which are beautiful to the user.

### Anti-fingerprint property evaluation

In anti-fingerprint property evaluation, an artificial eccrine perspiration/sebum emulsion used in ASTM D4265-98 is applied to the coating layer surface using a stamp, and a remaining trace level measured after 1 minute is evaluated. Grade 1 is the extent to which the remaining traces remain very densely, and grade 5 is the case where the remaining traces do not exist. The anti-fingerprint property evaluation on the surface of the decorative film of the present application is grade 3 or more.

### Surface roughness (Rz) evaluation

In one example, the roughness (Rz) of the coating layer surface may be in a range of 3 to 12 µm.

As the surface roughness has a higher value, the differences in surface gloss occur less as well as the fingerprints disappear easily. In the present application, the "surface roughness (Rz)" can be measured according to ISO 4281, which is a numerical value expressing the degree of irregularities. Specifically, the surface roughness (Rz) may be referred to as ten-point average roughness. Specifically, the surface roughness shows the deviation obtained by taking a reference length (L) as the cross-sectional curve of the coating layer surface, and measuring, in a straight line that does not transversely cut the cross-sectional curve parallel to the average line of the portion, the distance between the top to fifth peaks (ridges) and the bottom to fifth gorges (valleys). In this case, the reference length (L) may be in a level of several mm, for example, in a range of about 0.1 to 1 mm, specifically about 0.8 mm.

Specifically, the roughness (Rz) of the coating layer surface may be 3.0 µm or more, 3.1 µm or more, 3.2 µm or more, 3.3 µm or more, 3.4 µm or more, 3.5 µm or more, 3.6 µm or more, 3.7 µm or more, 3.8 µm or more, 3.9 µm or more 4.0 µm or more, 4.1 µm or more, 4.2 µm or more, 4.3 µm or more, 4.4 µm or more, or 4.5 µm or more. Then, the upper limit of the surface roughness may be, for example, 12.0 µm or less, 11.9 µm or less, 11.8 µm or less, 11.7 µm or less, 11.6 µm or less, 11.5 µm or less, 11.4 µm or less, 11.3 µm or less, 11.2 µm or less, or 11.1 µm or less. When the coating layer surface of the film has surface roughness (Rz) in the above range, it may be advantageous to improve the anti-fingerprint properties of the film as in the matter capable of preventing the adhesion of contaminants to the surface due to a user's touch or external factors by reducing the surface contact area.

### Hardness evaluation

In one example, as a surface hardness test for the coating layer surface, the surface hardness measured by Erichsen Universal Scratch Tester 413 using a diamond tip on the coating layer surface may be 0.4 N or more.

Like the contamination resistance, the higher the surface hardening density, the higher the hardness, and in the present application, such surface hardness can be realized by adding a multifunctional oligomer and a double curing method.

In the present application, the "surface hardness" may be measured according to DIN68861:2013, part.4 of EN 15186, met. B, as described in the following examples. The surface hardness indicates firmness of the surface, which is a numerical value related to durability of the film.

In one example, the surface hardness may be 0.4 N or more, 0.41 N or more, 0.42 N or more, 0.43 N or more, 0.44 N or more, 0.45 N or more, 0.46 N or more, 0.47 N or more, 0.48 N or more, 0.49 N or more, or 0.50 N or more. The upper limit is not particularly limited. When the surface hardness of the film is satisfied, it is possible to provide a laminated film having excellent mechanical properties and durability.

### Abrasion resistance evaluation

In one example, as an abrasion resistance test for the coating layer surface, the difference in gloss before and after abrasion measured by a taber abrasion tester performed for 1000 cycles with a load of 1 kg using a CS-10 abrasive wheel on the coating layer surface may be 0.9 or less.

The abrasion resistance using CS-10 is a physical property to improve as the surface hardening density increases. As described above, the surface hardening density of the decorative film of the present application is improved by using a multifunctional oligomer and a double curing method.

For example, according to ASTM D 4060, the result value can be obtained by 1) measuring the initial gloss of the sample, and then 2) measuring the gloss after the abrasion resistance evaluation (1000 times), 3) evaluating the difference of the gloss measured in Method 1) - the gloss measured in Method 2), and 4) evaluating the abrasion resistance with three samples, and then measuring the difference in gloss and calculating the average value.

In one example, as an abrasion resistance test for the coating layer surface, the weight difference before and after abrasion measured by a taber abrasion tester performed for 1000 cycles with a load of 1 kg using a CS-10 abrasive wheel on the coating layer surface may be 1.1 mg or less.

For example, according to ASTM D 4060, the result value can be obtained by 1) measuring the initial weight of the sample, and then 2) measuring the weight after the abrasion resistance evaluation (1000 times), and then 3) calculating the difference of the initial weight - the weight after abrasion resistance evaluation, 4) evaluating the abrasion resistance with three samples, and then calculating the weight difference and calculating the average value.

In one example, as a chemical resistance test according to ASTM D5402 for the coating layer surface, in the MEK rub test performed after rubbing the coating layer surface with a load of 3 kg for 1000 cycles, there may be no change in appearance.

The abrasion resistance using MEK rubbing is a physical property to improve as the surface hardening density increases. As described above, the surface hardening density of the decorative film of the present application is improved by using a multifunctional oligomer and a double curing method.

### Resin composition

In the present application, the coating layer having the above characteristics may be obtained through hardening treatment of a composition having a predetermined constitution. Specifically, the coating layer comprises a cured product of a curable composition.

In one example, the treatment agent used in the present application, that is, the coating composition may be a photocurable solventless type composition. That is, the composition may not comprise a solvent, such as an organic solvent or an aqueous solvent. When the solventless type composition is used, a drying process for a solvent can be omitted, so that process efficiency can be increased. In addition, by using the solventless type composition, it is possible to prevent deterioration of surface characteristics required for the film of the present application due to bubbles and the like generated while the solvent is volatilized during the solvent drying process. Specifically, the composition may be a UV curable solventless type composition, which may comprise a reactive component (photocurable component) having a curable reactive group.

The coating layer comprises a cured product of a resin composition including a monomer component (A) and an oligomer component (B). That is, after the following photocuring treatment is performed on a resin composition having a predetermined constitution, a coating layer having a surface on which the wrinkles are formed as described above may be prepared.

### Monomer components

A reactive monomer component can function like a kind of solvent to lower the viscosity of the composition (compared to the case where only the oligomer component is included), thereby increasing the coating processability of the base material layer.

The monomer may be of two or more types, which comprise a monofunctional monomer and a multifunctional monomer.

Specifically, the resin composition comprises 10 to 30 parts by weight of a monofunctional monomer and 15 to 35 parts by weight of a multifunctional monomer.

### Monofunctional monomer

The monofunctional monomer may have a weight average molecular weight (Mw) in a range of 90 to 400. Specifically, the lower limit may be, for example, 90 or more, 100 or more, 110 or more, 120 or more, 130 or more, or 140 or more, and the upper limit may be 400 or less, 390 or less, 380 or less, 370 or less, 360 or less, or 350 or less.

In addition, the content of the monofunctional monomer may be 10 to 30 parts by weight. The lower limit may be 10, 11, 12, 13, 14, 15, 16, 17, 18, or 19, and the upper limit may be 30, 29, 28, 27, 26, 25, 24, 23, 22, 21, or 20.

The monofunctional monomer may be a hydrophilic monomer.

The hydrophilic monofunctional monomer is a monomer having a polar functional group. The hydrophilic monofunctional monomer may be more preferred in terms of cure progress and coating adhesion force. The hydrophilic monofunctional monomer is preferably included in a range of 10 to 30 parts by weight. Upon excessive inclusion, it may be disadvantageous in terms of contamination resistance.

In one example, the hydrophilic monomer may be a monomer having a polar functional group such as a hydroxyl group, a nitrogen-containing functional group, or an alkylene oxide group. Specifically, the reactive monomer may be a (meth)acrylic monomer having a polar functional group.

Without being particularly limited, as the hydroxy group-containing (meth)acrylic monomer, hydroxyalkyl (meth)acrylates such as 2-hydroxyethyl (meth)acrylate, 2-hydroxypropyl (meth)acrylate, 4-hydroxybutyl (meth)acrylate, 6-hydroxyhexyl (meth)acrylate, or 8-hydroxyoxyl (meth)acrylate may be used.

In the case of the nitrogen-containing functional group, as a functional group containing nitrogen in the molecule, for example, an amine group, an imine group, an amide group, a nitrile group, a nitro group, an azo group, an imide group, or an azide group, and the like may be exemplified, without being limited thereto. In one example, when a (meth)acrylic monomer having a nitrogen-containing functional group is used, its specific type is not particularly limited, but for example, (meth)acrylonitrile, N-methylacrylamide, (meth)acrylamide, alkyl (meth)acrylamide, dialkyl (meth)acrylamide, hydroxyalkyl (meth)acrylamide, N-butoxy methyl (meth)acrylamide, N-vinyl pyrrolidone, N-vinyl caprolactam, 2-aminoethyl (meth)acrylate, 3-aminoethyl (meth)acrylate, N,N-dimethylaminoethyl (meth)acrylate, or N,N-dimethylaminopropyl (meth)acrylate, and the like may be used.

In the case of a monomer having an alkylene oxide, for example, an alkoxy alkylene glycol (meth)acrylic acid ester, an alkoxy dialkylene glycol (meth)acrylic acid ester, or an alkoxy polyethylene glycol (meth)acrylic acid ester, and the like may be used, without being particularly limited thereto.

### Multifunctional monomer

The composition comprises a multifunctional monomer. Specifically, the composition may further comprise a monomer having two or more reactive functional groups. The multifunctional monomer increases curing strength to impart durability to the cured layer. In particular, the multifunctional monomer having a linear structure may have an effect of compensating for the increase in gloss due to the addition of the multifunctional oligomer.

The multifunctional monomer may have a weight average molecular weight (Mw) in a range of 150 to 600. Specifically, the lower limit may be, for example, 150 or more, 160 or more, 170 or more, 180 or more, 190 or more, 200 or more, 210 or more, 220 or more, 230 or more, 240 or more, or 250 or more, and the upper limit may be 600 or less, 590 or less, 580 or less, 570 or less, 560 or less, or 550 or less.

In addition, the content of the multifunctional monomer may be 15 to 35 parts by weight. The lower limit may be 15, 16, 17, 18, 19, 20, 21, 22, 23, 24, or 25, and the upper limit may be 35, 34, 33, 32, 31, 30, 29, 28, 27, or 26.

At least one of BDDA, HD(EO)nDA, HPNDA, DPGDA, TEGDA, NPG(PO)2DA, TTEGDA, HDDA, PEG200DA, PEG300DA, PEG400DA, and PPG400DA may be applied as the linear multifunctional monomer. However, it is not limited thereto.

### Oligomer component

The oligomer may be a multifunctional oligomer. In addition, the multifunctional oligomer may comprise two or more multifunctional oligomers, which may comprise, for example, two or more of oligomers with 2 to 9 functionalities.

Specifically, it comprises 1 to 10 parts by weight of a bifunctional oligomer and 35 to 65 parts by weight of an oligomer with 3 or more functionalities.

Each oligomer may comprise an oligomer having a weight average molecular weight (Mw) of 1000 to 15000.

### Bifunctional oligomer

As will be described below, in the surface gloss increase due to the addition of the oligomer with 3 or more functionalities, by adding the bifunctional oligomer, it is possible to provide a gloss lowering effect, and by controlling the wrinkles, it is also possible to significantly improve anti-fingerprint properties.

The bifunctional oligomer is a silicone oligomer, which is an oligomer that an acrylatebased silicone group is inserted.

The content of the bifunctional oligomer may be 1 to 10 parts by weight. The lower limit may be 1, 2, 3, 4, or 5 parts by weight, and the upper limit may be 10, 9, 8, 7, or 6.

### Oligomer with 3 or more functionalities

The oligomer with 3 or more functionalities is added to provide fast curing rate and hardening density increase effects, whereby contamination resistance and hardness of the coating layer surface can be secured. However, the surface gloss may increase as the oligomer component with 3 or more functionalities increases.

The content of the oligomer with 3 or more functionalities may be 35 to 65 parts by weight. The lower limit may be 35, 36, 37, 38, 39, 40, 41, 42, 43, 44, 45, 46, 47, 48, or 49 parts by weight, and the upper limit may be 65, 64, 63, 62, 61, 60, 59, 58, 57, or 56, 55, 54, 53, 52, 51, or 50.

### Additives

The resin composition may further comprise at least one of a first light stabilizer, a second light stabilizer, a particle dispersing agent, an antifoaming agent, organic/inorganic particles, and a photoinitiator.

### Light stabilizer

The composition may further comprise a light stabilizer. If it is a light stabilizer that can be used in a curing process to be described below, the type is not particularly limited, and known commercial products may also be used.

The content of the light stabilizer is not particularly limited. However, for example, the composition may comprise 0.5 to 3 parts by weight of the light stabilizer relative to 100 parts by weight of the sum of the monomer component and the oligomer component. Specifically, the content of the light stabilizer may be 3 parts by weight or less, 2.5 parts by weight or less, 2 parts by weight or less, 1.5 parts by weight or less, or 1.0 parts by weight or less. Then, the lower limit of the content may be, for example, 0.5 parts by weight, or 0.7 parts by weight. The light stabilizer can prevent damage to the laminated film by ultraviolet rays.

Particularly, it may comprise two or more light stabilizers, which comprises a first light stabilizer and a second light stabilizer.

If the first light stabilizer is a UV absorber, which is a light stabilizer capable of absorbing UV to convert it into heat, any light stabilizer applicable in this technical field can be applied.

In addition, if the second light stabilizer is a hindered amine light stabilizer (HALS), which is a light stabilizer capable of removing radicals to prevent degradation of the polymer, any light stabilizer applicable in this technical field can be applied.

### Particle dispersing agent

The composition may further comprise a particle dispersing agent. The particle dispersing agent may serve to help the inorganic particles to be well dispersed in the coating solution. In the present application, the particle dispersing agent is not particularly limited, and known particle dispersing agents, which are commonly available for purchase, may be used.

The content of the particle dispersing agent is not particularly limited. However, for example, the composition may comprise 0.5 to 2 parts by weight of the particle dispersing agent relative to 100 parts by weight of the sum of the monomer component and the oligomer component. Specifically, the lower limit of the particle dispersing agent may be 0.5 parts by weight or less, 0.6 parts by weight or less, 0.7 parts by weight or less, 0.8 parts by weight or less, or 0.9 parts by weight or less. Then, the upper limit of the content may be, for example, 2.0 parts by weight, 1.9 parts by weight, 1.8 parts by weight, 1.7 parts by weight, or 1.6 parts by weight.

### Antifoaming agent

The composition may further comprise an antifoaming agent. The antifoaming agent may serve to remove air bubbles generated in the treatment agent. In the present application, the antifoaming agent is not particularly limited, and known antifoaming agents, which are commonly available for purchase, may be used. The content of the antifoaming agent is not particularly limited. However, for example, the composition may comprise 0.5 to 2 parts by weight of the antifoaming agent relative to 100 parts by weight of the sum of the monomer component and the oligomer component. Specifically, the lower limit of the antifoaming agent may be 0.5 parts by weight or less, 0.6 parts by weight or less, 0.7 parts by weight or less, 0.8 parts by weight or less, or 0.9 parts by weight or less. Then, the upper limit of the content may be, for example, 2.0 parts by weight, 1.9 parts by weight, 1.8 parts by weight, 1.7 parts by weight, or 1.6 parts by weight.

### Organic and/or inorganic particles

The composition may further comprise organic and/or inorganic particles. The type of particles is not particularly limited, and known organic or inorganic particles can be used. The organic and/or inorganic particles serve as nuclei capable of uniformly forming fine wrinkles.

Specifically, it is preferred that the coating layer comprises 10 parts by weight or less of organic particles and/or inorganic particles. The upper limit may be 10 parts by weight, 9 parts by weight, 8 parts by weight, 7 parts by weight, 6 parts by weight, 5 parts by weight, or 4 parts by weight.

In one example, the inorganic particles may be particles functioning as a so-called quencher. In one example, as the inorganic particles, particles having a size ranging from 3 to 10 µm may be used. In this case, the size of the particles may mean the average size of the particles, and may be a d50 value. When the particles having a size in the above range are used, it helps to ensure the surface roughness as described above. As one example, silica particles may be used.

In addition, as the organic particles, the particles having the size in the range of 3 to 10 µm may also be used. As one example, polyurethane particles may be used.

In one example, a coating layer composition using a small amount of a quencher in the form of particles as above and simultaneously having the above-described constitution may have a low viscosity, for example, a viscosity of 100 to 500 cps at room temperature. Specifically, when the particle-shaped additives are used in an excessive amount to implement a matte effect, the viscosity of the composition increases, and accordingly, the coating workability for the base material layer is not good. However, since the present application does not use any quencher or can use it in a significantly slight amount compared to the conventional technology as described above, the composition for forming a coating layer may have, for example, a viscosity of 500 cps or less, 470 cps or less, 440 cps or less, 410 cps or less, or 380 cps or less at room temperature. The viscosity lower limit of the composition may be, for example, 100 cps or more, 130 cps or more, 160 cps or more, 190 cps or more, 220 cps or more, or 250 cps or more. At this time, the room temperature means a temperature in a state that is not particularly reduced or warmed, which may mean a temperature in a range of about 18 to 32°C, specifically a temperature in the range of 22 to 28°C, a temperature in the range of 23 to 27°C, or a temperature of about 25°C. In addition, the viscosity may be measured according to a known method using a Brookfield viscometer.

### Photoinitiator

The composition may further comprise a photoinitiator. The photoinitiator may serve to enable curing of the coating layer.

The content of the photoinitiator is not particularly limited. However, for example, the composition may comprise 1 to 8 parts by weight of the photoinitiator relative to 100 parts by weight of the sum of the monomer component and the oligomer component. Specifically, the lower limit of the photoinitiator may be 1 part by weight or less, 1.5 parts by weight or less, 2 parts by weight or less, 2.5 parts by weight or less, or 3 parts by weight or less. Then, the upper limit of the content may be, for example, 8 parts by weight, 7.5 parts by weight, 7 parts by weight, 6.5 parts by weight or 6 parts by weight.

### Manufacturing method

In one example of the method for forming the coating layer, it may comprise: a first light irradiation step of irradiating a composition applied on the base material layer with light (L1) having a predetermined wavelength under an inert gas condition to form peak portions, and valley portions having fine wrinkle portions on the surface of the applied composition; and a second light irradiation step of irradiating the composition with light (L2) having a longer wavelength than that of the light (L1) under an air condition to form the coating layer.

The method may comprise a process of directly applying the composition comprising the oligomer component and the monomer component on the base material layer, and then primarily and secondarily curing it.

The primary cure and the secondary cure may be referred to as the first light irradiation step and the second light irradiation step, respectively, and these cures may be performed in a manner that wavelengths of irradiated light, light irradiance levels, and/or light irradiation times, and the like are the same or different from each other. At this time, the primary cure is performed under conditions capable of forming wrinkles while shrinking the surface of the coating layer applied on the base material layer. Specific conditions are described below.

A method of applying the composition on the base material layer is not particularly limited. For example, the application of the composition onto the base material layer may be performed using a known method such as Mayer, D-bar, rubber roll, G/V roll, air knife, or slot die.

The method comprises: a first light irradiation step of irradiating a composition applied on a base material layer with light (L1) having a relatively short wavelength under an inert gas condition; and a second light irradiation step of irradiating the composition with light (L2) having a longer wavelength than the light (L1) under an air condition to cure the composition. Specifically, the method comprises: a first light irradiation step of irradiating the composition applied on the base material layer with light (L1) having a predetermined wavelength under an inert gas condition to form wrinkles on the surface of the applied composition; and a second light irradiation step of irradiating the composition with light (L2) having a longer wavelength than the light (L1) under an air condition to form a coating layer, which is a cured product of the composition.

A device for irradiating it with light in each step is not particularly limited, and, for example, in the case of irradiating it with light having a wavelength of 250nm or less in the first irradiation step and irradiating it with light having a wavelength of 400nm or less in the second irradiation step, a known mercury or metal halide lamp, and the like may be used.

The first light irradiation step is a step for forming wrinkles by irradiating the composition applied on the base material layer with light and shrinking the surface by the irradiated light. The surface on which the wrinkles are formed allows the matte characteristics to be imparted by increasing scattering of the light incident on the surface. The surface on which the wrinkles are formed may have surface roughness and gloss properties as described above. Accordingly, in the present application, the quencher may not be used, or even if the quencher is used, it may be used in a significantly lower content compared to the conventional technology aiming to implement a matte effect.

In one example, in the first light irradiation step, the light with a wavelength of 250 nm or less having high energy may be irradiated. Specifically, the light with a wavelength of 130 nm or more, 140 nm or more, 150 nm or more, 160 nm or more, or 170 nm or more may be irradiated in the first light irradiation step. In one example, the upper limit of the wavelength of the light irradiated in the first light irradiation step may be, for example, 250 nm or less, 240 nm or less, 230 nm or less, 220 nm or less, 210 mm or less, 200 nm or less, 190 nm or less, or 180 nm or less.

The first light irradiation step may be performed in an inert atmosphere. The gas used to form the inert atmosphere may be, for example, He, Ne, Ar, and/or N₂.

In one example, the inert atmosphere in which the first light irradiation step is performed may be an atmosphere in which the concentration of oxygen (O₂) is about 4,000 ppm or less. Specifically, the upper limit of the concentration of oxygen in the inert atmosphere may be 3,000 ppm or less, 2,500 or less, 2,000 ppm or less, 1,500 ppm or less, or 1,000 ppm or less, and may be, more specifically, 900 ppm or less, 800 ppm or less, 700 ppm or less, 600 ppm or less, 500 ppm or less, 400 ppm or less, or 300 ppm or less.

In one example, the inert atmosphere may be formed such that the concentration of oxygen in the nitrogen gas (N₂) satisfies the above range. That is, as the oxygen concentration is closer to 0, it is preferred.

When the first light irradiation is performed under such an inert atmosphere condition, it is advantageous to secure the above-described wrinkles and surface characteristics. For example, when the first light irradiation is performed in an inert atmosphere in which the concentration of oxygen exceeds the above range, it is difficult to form wrinkles as mentioned above, and the above surface characteristics cannot be provided. For example, wrinkles should be evenly formed over the entire surface region so that the above-described characteristics may be satisfied, but the wrinkles may be rarely observed on the surface.

In one example, when the first light irradiation step is performed, the distance between the composition and the light source, that is, the distance from the surface of the composition applied on the base material layer to the light source may be 5 mm or more. Specifically, the lower limit of the distance may be, for example, 10 mm or more, 15 mm or more, 20 mm or more, 25 mm or more, 30 mm or more, 35 mm or more, 40 mm or more, 45 mm or more, or 50 mm or more, and the upper limit may be, for example, 90 mm or less, 85 mm or less, 80 mm or less, 75 mm or less, 70 mm or less, 65 mm or less, 60 mm or less, 55 mm or less, or 50 mm or less. In the first light irradiation step, when the distance between the composition and the light source is adjusted within the above range, an appropriate light quantity can reach the composition with an appropriate intensity, and as a result, it is advantageous to form a surface on which the wrinkles having the above-described shape and size are formed, and to secure the described degree of surface characteristics (e.g., surface roughness, glossiness).

In one example, the irradiance level of the light irradiated in the first light irradiation step may be 1 mJ/cm², or 5 mJ/cm² or more. Specifically, the lower limit of the light irradiance level in the first light irradiation step may be, for example, 10 mJ/cm² or more, 15 mJ/cm² or more, 20 mJ/cm² or more, 25 mJ/cm² or more, or 30 mJ/cm² or more, and the upper limit may be, for example, 100 mJ/cm² or less, 90 mJ/cm² or less, 80 mJ/cm² or less, 70 mJ/cm² or less, 60 mJ/cm² or less, 50 mJ/cm² or less, 40 mJ/cm² or less, 30 mJ/cm² or less, or 25 mJ/cm² or less. In the first light irradiation step, when the light irradiance level is adjusted within the above range, it is advantageous to form the above-described surface on which the wrinkles are formed, and to secure the above-described degree of surface characteristics (e.g., surface roughness, glossiness).

In one example, the light irradiation time in the first light irradiation step is several seconds, where for example, the upper limit may be 10 seconds, or less or 5 seconds or less, and the lower limit may be, for example, 0.5 seconds or more, or 1 second or more. In the first light irradiation step, when the light irradiation time is adjusted in the above range, it is advantageous to form a surface on which the wrinkles having the above-described shape and size are formed, and to secure the above-described degree of surface characteristics (e.g., surface roughness, glossiness).

At this time, the light irradiation time may be controlled by a method of adjusting a moving speed of the resin composition irradiated with light. For example, the light irradiation time may be controlled while properly adjusting the moving speed of the base material layer coated with the composition on the conveyor belt within a range of 1 to 50 m/min.

The second light irradiation step is a step of applying light energy with a wavelength different from that in the first light irradiation step to the coating composition coated on the base material layer and having wrinkles formed on the surface through the first light irradiation step to completely cure the coating composition.

In the second light irradiation step, the light having a wavelength within a range of 200 to 400 nm may be irradiated. Specifically, the second light irradiation step may be a step of irradiating it with a wavelength of 210 nm or more, 220 nm or more, 230 nm or more, 240 nm or more, 250 nm or more, 260 nm or more, 270 nm or more, 280 nm or more, 290 nm or more, or 300 nm or more. The upper limit of the light wavelength irradiated in the second light irradiation step may be, for example, 400 nm or less, 390 nm or less, 380 nm or less, 370 nm or less, 360 nm or less, 350 nm or less, 340 nm or less, 330 nm or less, 320 nm or less, 310 nm or less, or 300 nm or less. The coating composition in which wrinkles are formed on the surface while being cured only to a certain level by the first light irradiation step may be cured in the (applied) thickness direction while passing through the second light irradiation step in which a relatively long wavelength is irradiated.

The second irradiation step is a step of irradiating it with light having a higher wavelength than that in the first irradiation step in the above-described wavelength range.

The second light irradiation step is performed in an air atmosphere. The curing rate of the composition can be improved through the air atmosphere, and an effect, in which the surface of the coating layer is cleaned while the conversion of oxygen molecules (O₂) to ozone (O₃) occurs during the irradiation process, can also be obtained.

In one example, when the second light irradiation step is performed, the distance between the composition and the light source, that is, the distance from the surface of the composition applied on the base material layer to the light source may be 50 mm or less, 40 mm or less, 30 mm or less, or 20 mm or less. Specifically, the upper limit of the distance may be, for example, 19 mm or less, 18 mm or less, 17 mm or less, 16 mm or less, 15 mm or less, 14 mm or less, 13 mm or less, 12 mm or less, 11 mm or less, or 10 mm or less, and the lower limit may be, for example, 0.5 mm or more, 1 mm or more, 2 mm or more, 3 mm or more, 4 mm or more, or 5 mm or more. In another example, the distance between the composition and the light source upon performing the second light irradiation step may be smaller than that upon performing the first light irradiation step. When the distance between the composition and the light source is adjusted within the above range upon the second light irradiation, it is advantageous to increase the curing degree of the entire coating layer.

In one example, the irradiance level of light irradiated in the second light irradiation step may be greater than the irradiance level of light irradiated in the first light irradiation step. For example, the irradiance level of the light irradiated in the second light irradiation step may be 150 mJ/cm² or more, specifically 160 mJ/cm² or more, 170 mJ/cm² or more, 180 mJ/cm² or more, 190 mJ/cm² or more, 200 mJ/cm² or more, 210 mJ/cm² or more, 220 mJ/cm² or more, 230 mJ/cm² or more, 240 mJ/cm² or more, 250 mJ/cm² or more, or 300 mJ/cm² or more. Then, the upper limit may be, for example, 500 mJ/cm² or less, or 400 mJ/cm² or less, specifically, for example, 350 mJ/cm² or less, 340 mJ/cm² or less, 320 mJ/cm² or less, 310 mJ/cm² or less, or 300 mJ/cm² or less. When the light irradiance level is adjusted within the above range upon the second light irradiation, it is advantageous to increase the curing degree of the entire coating layer.

In one example, the light irradiation time in the second light irradiation step may be the same as or different from the light irradiation time in the first light irradiation step as described above. Specifically, the light irradiation time in the second light irradiation step is several seconds, where for example, the upper limit may be 10 seconds or less, or 5 seconds or less, and the lower limit may be, for example, 0.5 seconds or more, or 1 second or more.

When the first light irradiation and the second light irradiation are performed as above, the surface of the coating layer may have a relatively dense curing density. Specifically, if relatively high-energy, short-wavelength light acts in the vicinity of hundreds nm near the surface of the coated coating layer upon the first light irradiation, and then, the second light irradiation is performed, the surface of the coating layer has a compact curing density. However, the short-wavelength light used for the first light irradiation does not affect the inside of the coating layer, so that the curing density inside the coating layer may be relatively low. Therefore, the inside of the coating layer having a relatively low curing density may contribute to securing flexibility, and the surface of the coating layer having a densely cured state may maintain distinct wrinkles.

### Mode for Invention

Hereinafter, the present application will be described in more detail through Experimental Example below.

### [Experimental Example]

After preparing the compositions satisfying Examples 1 to 3 and Comparative Examples 1 to 4 described in Table 1 below, a polyethylene terephthalate (PETG) film (width 20 cm X length 20 cm) containing glycol as a base material layer was prepared, and the prepared coating compositions were each applied to the prepared film surface using a bar coating method to a thickness of 4 µm. Thereafter, the films applied by the resin composition were each primarily irradiated with light having a wavelength of 250 nm or less in a light quantity of 1 to 100 mJ/cm² in an inert atmosphere, and irradiated with light having a wavelength in the range of 200 to 400 nm in a light quantity of 150 to 500 mJ/cm² in an air atmosphere, whereby the coating layers were cured to prepare specimens, respectively.

For Examples 1 to 3, and Comparative Examples 1 to 4, the values measured according to the gloss measurement method, contamination resistance measurement method (curry, wine, mustard, coffee, tea, ethanol), and measurement method of surface hardness and anti-fingerprint properties as described above, respectively were derived, and were shown together in Table 1 below.

**[Table 1]**

| | Example | | | Comparative Example | | | |
|---|---|---|---|---|---|---|---|
| | 1 | 2 | 3 | 1 | 2 | 3 | 4 |
| Monofunctional monomer (HEA) | 20% | 17% | 22% | 40% | 20% | 20% | 30% |
| Bifunctional monomer (PEG200DA) | 25% | 27% | 23% | 10% | 25% | 25% | 35% |
| Oligomer with 3 to 9 functionalities (Miramer PU330) | 50% | 49% | 52% | 50% | 55% | 40% | 30% |
| Bifunctional silicone oligomer (molecular weight 3000) | 5% | 7% | 3% | - | - | 15% | 5% |
| Fist light stabilizer (Tinuvin329) | 1.2phr | 1phr | 1phr | 1.2 phr | 1.2 phr | 1.2 phr | 1.2 phr |
| Second light stabilizer (Tinuvin770DF) | 0.4phr | 0.6phr | 1phr | 0.4 phr | 0.4 phr | 0.4 phr | 0.4 phr |
| Particle dispersing agent (TEGO Dispers673) | 1phr | 1.5phr | 0.9phr | 1 phr | 1 phr | 1 phr | 1 phr |
| Antifoaming agent (Foamex845) | 0.5phr | 1.1phr | 0.6phr | 0.5 phr | 0.5 phr | 0.5 phr | 0.5 phr |
| Organic particles (MPI, Micro Touch 800XF | 5phr | 7phr | 6phr | 5 phr | 5 phr | 5 phr | 5 phr |
| Photoinitiator (Omnirad 184) | 5phr | 5phr | 5phr | 5 phr | 5 phr | 5 phr | 5 phr |
| Surface gloss | 5.5 | 5.0 | 5.7 | 6.1 | 7.0 | 5.0 | 5.3 |
| Contamination resistance | 5,5,5,5,5,5 | 5,5,5,5,5,5 | 5,5,5,5,5,5 | 3,3,4,5,5,3 | 3,5,5,5,5,5 | 2,4,3,5,4,5 | 2,3,2,4,4,4 |
| Surface hardness | 0.4N | 0.4N | 0.4N | 0.3N | 0.4N | 0.3N | 0.2N |
| Anti-fingerprint property | Grade 4 | Grade 4 | Grade 4 | Grade 2 | Grade 2 | Grade 3 | Grade 3 |

As shown in Table 1 above, in the case of Examples 1 to 3, through the content ratio adjustment of the monofunctional monomer and the multifunctional oligomer, it was confirmed that decorative films satisfying the target gloss of 6.5 or less, grade 5 in all 6 contaminationresistant items, and surface hardness of 0.4N could be provided.

In addition, it could be confirmed that in Comparative Example 1, the monofunctional monomer content exceeded the intended range (10 to 30 parts by weight) of the present application, whereby the contamination resistance was poor and the surface hardness was lowered; Comparative Example 2 was the case where in the absence of silicone oligomers, the trifunctional oligomer content was included at 50%, but even though the trifunctional oligomer content was not greatly increased, there was a problem that the surface gloss was greatly increased; in Comparative Example 3, the bifunctional oligomer content exceeded the intended range (1 to 10 parts by weight) of the present application, whereby the gloss was lowered, but the contamination resistance and surface hardness properties were poor; and in Comparative Example 4, the multifunctional oligomer content was less than the intended range (35 to 65 parts by weight) of the present application, whereby the contamination resistance and surface hardness properties were poor.

## Claims

1. A method for manufacturing a decorative film comprising: a base material layer; and a coating layer located on at least one side of the base material layer and having a surface on which fine wrinkles are formed, wherein
the coating layer is a cured product of a resin composition, where the resin composition comprises a monomer component and an oligomer component, wherein
the monomer component comprises 10 to 30 parts by weight of a monofunctional monomer and 15 to 35 parts by weight of a multifunctional monomer, wherein
the oligomer component comprises 1 to 10 parts by weight of a bifunctional oligomer and 35 to 65 parts by weight of an oligomer with 3 or more functionalities;
the method comprising the following steps:
a first light irradiation step of irradiating a composition applied on the base material layer with light (L1) having a predetermined wavelength under an inert gas condition to form wrinkles on the surface of the applied composition; and
a second light irradiation step of irradiating the composition with light (L2) having a longer wavelength than that of the light (L1) under an air condition to form the coating layer, which is a cured product of the composition, wherein
the light (L2) has a wavelength in a range of 200 to 400 nm.

2. The method according to claim 1, wherein
the coating layer is a silicone component-containing coating layer.

3. The method according to claim 1, wherein
the resin composition further comprises at least one of a light stabilizer, a particle dispersing agent, an antifoaming agent, organic and/or inorganic particles, and a photoinitiator.

4. The method according to claim 1, wherein
the coating layer surface has roughness (Rz) in a range of 3 to 12 µm.

5. A decorative film, obtainable or obtained by a method according to any of claims 1 to 4.

## Patentansprüche

1. Verfahren zur Herstellung einer Dekorfolie, umfassend: eine Basismaterialschicht; und eine Beschichtungsschicht, die sich auf mindestens einer Seite der Basismaterialschicht befindet und eine Oberfläche aufweist, auf der feine Unebenheiten gebildet sind, wobei
die Beschichtungsschicht ein ausgehärtetes Produkt einer Harzzusammensetzung ist, wobei die Harzzusammensetzung eine Monomerkomponente und eine Oligomerkomponente umfasst, wobei
die Monomerkomponente 10 bis 30 Gewichtsteile eines monofunktionalen Monomers und 15 bis 35 Gewichtsteile eines multifunktionalen Monomers umfasst, wobei
die Oligomerkomponente 1 bis 10 Gewichtsteile eines bifunktionalen Oligomers und 35 bis 65 Gewichtsteile eines Oligomers mit 3 oder mehr Funktionalitäten umfasst;
wobei das Verfahren die folgenden Schritte umfasst:
einen ersten Lichtbestrahlungsschritt des Bestrahlens einer auf die Basismaterialschicht aufgetragenen Zusammensetzung mit Licht (L1) einer vorbestimmten Wellenlänge unter Inertgasbedingungen, um Unebenheiten auf der Oberfläche der aufgetragenen Zusammensetzung zu bilden; und
einen zweiten Lichtbestrahlungsschritt des Bestrahlens der Zusammensetzung mit Licht (L2), das eine längere Wellenlänge als das Licht (L1) aufweist, unter Luftbedingungen, um die Beschichtungsschicht zu bilden, die ein ausgehärtetes Produkt der Zusammensetzung ist, wobei
das Licht (L2) eine Wellenlänge in einem Bereich von 200 bis 400 nm aufweist.

2. Verfahren nach Anspruch 1, wobei
die Beschichtungsschicht eine Beschichtungsschicht ist, die eine Silikonkomponente enthält.

3. Verfahren nach Anspruch 1, wobei
die Harzzusammensetzung weiter mindestens eines von einem Lichtstabilisator, einem Partikeldispersionsmittel, einem Antischaummittel, organischen und/oder anorganischen Partikeln und einem Photoinitiator umfasst.

4. Verfahren nach Anspruch 1, wobei
die Oberfläche der Beschichtungsschicht eine Rauheit (Rz) in einem Bereich von 3
bis 12 µm aufweist.

5. Dekorfolie, erhältlich oder erhalten durch ein Verfahren nach einem der Ansprüche 1 bis 4.

## Revendications

1. Procédé de fabrication d'un film décoratif comprenant : une couche de matériau de base ; et une couche de revêtement située sur au moins un côté de la couche de matériau de base et ayant une surface sur laquelle de fines rides sont formées, dans lequel
la couche de revêtement est un produit durci d'une composition de résine, où la composition de résine comprend un constituant monomère et un constituant oligomère, dans lequel
le constituant monomère comprend 10 à 30 parties en poids d'un monomère monofonctionnel et 15 à 35 parties en poids d'un monomère multifonctionnel, dans lequel
le constituant oligomère comprend 1 à 10 parties en poids d'un oligomère bifonctionnel et 35 à 65 parties en poids d'un oligomère doté de 3 fonctionnalités ou plus ;
le procédé comprenant les étapes suivantes :
une première étape d'irradiation de lumière consistant à irradier une composition appliquée sur la couche de matériau de base avec une lumière (L1) ayant une longueur d'onde prédéterminée sous une condition de gaz inerte pour former des rides sur la surface de la composition appliquée ; et
une seconde étape d'irradiation de lumière consistant à irradier la composition avec une lumière (L2) ayant une longueur d'onde plus longue que celle de la lumière (L1) sous une condition d'air pour former la couche de revêtement, qui est un produit durci de la composition, dans lequel
la lumière (L2) possède une longueur d'onde dans une plage de 200 à 400 nm.

2. Procédé selon la revendication 1, dans lequel
la couche de revêtement est une couche de revêtement contenant un constituant silicone.

3. Procédé selon la revendication 1, dans lequel
la composition de résine comprend en outre au moins l'un parmi un photostabilisant, un agent de dispersion de particules, un agent antimousse, des particules organiques et/ou inorganiques, et un photoinitiateur.

4. Procédé selon la revendication 1, dans lequel
la surface de la couche de revêtement possède une rugosité (Rz) dans une plage de 3 à 12 µm.

5. Film décoratif, obtenu ou pouvant être obtenu par un procédé selon l'une quelconque des revendications 1 à 4.
